# EUROPEAN PATENT APPLICATION

(11) **EP 4 734 077 A1**
(43) Date of publication of application: **29.04.2026**
(21) Application number: 24942092.8
(22) Date of filing: 26.09.2024
(51) Int. Cl.: G06V 20/59

(54) **DRIVING STATE DETECTION METHOD AND APPARATUS, ELECTRONIC DEVICE, AND READABLE STORAGE MEDIUM**

(30) Priority: 09.09.2024 CN 202411252748
(71) Applicant: Hangzhou Ruijian Zhixing Technology Co., Ltd., Hangzhou, Zhejiang 311222 (CN)
(72) Inventor: ZHANG, Shengfa, Hangzhou, Zhejiang 311222 (CN); HE, Zhuonan, Hangzhou, Zhejiang 311222 (CN); YANG, Yihong, Hangzhou, Zhejiang 311222 (CN); LIU, Guoqing, Hangzhou, Zhejiang 311222 (CN)
(74) Representative: Vogelbruch, Keang
(86) International application number: PCT/CN2024/121530
(87) International publication number: WO 2026/051136

(57) **Abstract**

The present disclosure provides a driving state detection method, apparatus, electronic device, and readable storage medium, wherein the method includes: acquiring a to-be-detected image containing a head of the driver; detecting the head image of the driver from the to-be-detected image, and determining the head pose of the driver according to the head image; detecting the face region of the driver from the to-be-detected image; determining the number of occluded eye feature points and an eye image from the face region; determining whether the eye image is reliable for gaze direction estimation according to the number of the occluded eye feature points; when the eye image is unreliable for gaze direction estimation, inputting the eye image into a gaze direction estimation model to determine the gaze direction of the driver; determining the gaze region of the driver according to the gaze direction of the driver, head position information, head rotation angle and position information of each region in the vehicle; and determining the driving state of the driver according to the head rotation angle and the gaze region. Through the method, accuracy of distracted state detection is improved.

## Description

### CROSS-REFERENCE TO RELATED APPLICATIONS

The present disclosure claims the priority to the Chinese patent application with the filling No. 202411252748.0 filed with the Chinese Patent Office on September 9, 2024, and entitled "DRIVING STATE DETECTION METHOD, APPARATUS, ELECTRONIC DEVICE, AND READABLE STORAGE MEDIUM", the contents of which are incorporated herein by reference in entirety.

### TECHNICAL FIELD

The present disclosure relates to the technical field of vehicle driving, and in particular to a driving state detection method, apparatus, electronic device, and readable storage medium.

### BACKGROUND ART

Distraction detection, also referred to as driver attention detection, is crucial in vehicle safe driving technology. By performing real-time distraction detection during the driver's operation of the vehicle, vehicle driving safety can be significantly enhanced, traffic accidents caused by driver distraction can be reduced, and driving safety can be ensured.

Currently, distraction detection typically uses the solvePnP algorithm (an algorithm for estimating camera pose) to detect whether the driver is in a distracted state. However, this approach relies on the face feature point information of the driver. When the driver's horizontal face yaw angle is excessively large (for example, the driver looks back), or the driver's vertical face pitch angle is excessively large (for example, looking down), such that the camera cannot capture the face image of the driver, the face feature point information of the driver cannot be recognized, and distraction detection cannot be performed on the driver, which undoubtedly increases safety risks during driving.

Moreover, distraction detection may also utilize the gaze direction of the driver to determine whether a distracted state exists. However, in certain situations, such as when the driver wears sunglasses or when there is reflection on the eye surface, gaze direction recognition becomes unreliable, which can easily lead to errors in gaze direction estimation, thereby affecting the accuracy of distraction detection.

### SUMMARY

In view of this, an objective of the present disclosure is to provide a driving state detection method, apparatus, electronic device, and readable storage medium, to improve the accuracy of detecting the distracted state of the driver.

In a first aspect, an embodiment of the present disclosure provides a driving state detection method, including:
acquiring in real time a to-be-detected image containing a head of the driver during the driving of the vehicle by the driver;
detecting the head image of the driver from the to-be-detected image, inputting the head image into a trained head pose estimation model, and outputting the head pose of the driver through the head pose estimation model, wherein the head pose includes a head rotation angle and head position information;
detecting the face region of the driver from the to-be-detected image when the to-be-detected image contains the face region of the driver;
determining face feature point position information from the face region, and determining eye feature point position information from the face feature point position information;
determining the number of occluded eye feature points according to the eye feature point position information; and determining an eye region from the face region according to the eye feature point position information, to determine an eye image according to the eye region;
determining whether the eye image is reliable for gaze direction estimation according to the number of the occluded eye feature points;
inputting, when the eye image is reliable for gaze direction estimation, the eye image into a trained gaze direction estimation model, and determining the gaze direction of the driver through the gaze direction estimation model;
determining the gaze region of the driver according to the gaze direction of the driver, the head position information, the head rotation angle, and position information of each region in the vehicle; and
determining whether the driving state of the driver is a distracted driving state according to the head rotation angle and the gaze region.

In combination with the first aspect, an embodiment of the present disclosure provides a first possible implementation of the first aspect, wherein the method further includes:
determining, when the to-be-detected image does not contain the face region of the driver, whether the driving state of the driver is a distracted driving state according to the head rotation angle of the driver.

In combination with the first aspect, an embodiment of the present disclosure provides a second possible implementation of the first aspect, wherein the occluded eye feature point is an eye feature point of a single eye; and the determining whether the eye image is reliable for gaze direction estimation according to the number of the occluded eye feature points includes:
calculating, for each eye, a first ratio between the number of the occluded eye feature points corresponding to the eye and a preset total number of single-eye feature points;
representing, in response to the first ratio being greater than a first preset threshold, that the eye image corresponding to the eye is unreliable for gaze direction estimation;
inputting, in response to the first ratio being not greater than the first preset threshold, the eye image corresponding to the eye into a trained glasses-wearing discrimination model to determine whether the eye wears glasses through the glasses-wearing discrimination model;
representing, in response to the eye not wearing glasses, that the eye image corresponding to the eye is reliable for gaze direction estimation;
determining, in response to the eye wearing glasses, a type of the glasses;
representing, in response to the type of the glasses being light-shielding glasses, that the eye image corresponding to the eye is unreliable for gaze direction estimation;
determining, in response to the type of the glasses being transparent glasses, whether a light spot on the lens corresponding to the eye in the glasses satisfies a condition for affecting gaze direction estimation; and
representing, in response to the condition that the light spot on the lens corresponding to the eye in the glasses satisfies the condition for affecting gaze direction estimation, that the eye image corresponding to the eye is unreliable for gaze direction estimation; and representing, in response to the condition that the light spot on the lens corresponding to the eye in the glasses does not satisfy the condition for affecting gaze direction estimation, that the eye image corresponding to the eye is reliable for gaze direction estimation.

In combination with the second possible implementation of the first aspect, an embodiment of the present disclosure provides a third possible implementation of the first aspect, wherein the step of determining, in response to the eye wearing glasses, a type of the glasses includes:
determining an intra-eyelid region and an extra-eyelid region from the eye image of the eye;
calculating a pixel grayscale mean value of the intra-eyelid region according to grayscale values of pixels in the intra-eyelid region; and calculating a pixel grayscale mean value of the extra-eyelid region according to grayscale values of pixels in the extra-eyelid region;
calculating a second ratio between the pixel grayscale mean value of the intra-eyelid region and the pixel grayscale mean value of the extra-eyelid region; and
determining, in response to the second ratio being greater than a second preset threshold, the type of the glasses as light-shielding glasses; when the second ratio is not greater than the second preset threshold, determining the type of the glasses as transparent glasses.

In combination with the second possible implementation of the first aspect, an embodiment of the present disclosure provides a fourth possible implementation of the first aspect, wherein when the type of the glasses is transparent glasses, the determining whether a light spot on the lens corresponding to the eye in the glasses satisfies a condition for affecting gaze direction estimation includes:
calculating, when the type of the glasses is transparent glasses, a third ratio between the number of pixels having grayscale values greater than a third preset threshold and a total number of pixels in the eye image according to grayscale values of pixels in the eye image of the eye;
representing, if the third ratio is greater than a fourth preset threshold, that the light spot on the lens corresponding to the eye in the glasses satisfies the condition for affecting gaze direction estimation; and
representing, if the third ratio is not greater than the fourth preset threshold, that the light spot on the lens corresponding to the eye in the glasses does not satisfy the condition for affecting gaze direction estimation.

In combination with the second possible implementation of the first aspect, an embodiment of the present disclosure provides a fifth possible implementation of the first aspect, wherein the gaze direction is the gaze direction of a single eye; and the determining the gaze region of the driver according to the gaze direction of the driver, the head position information, the head rotation angle, and position information of each region in the vehicle includes:
acquiring, for each timestamp between the current timestamp and a target historical timestamp, a first historical eye image at a first historical timestamp and a second historical eye image at a second historical timestamp for each eye of the driver, wherein the first historical timestamp is a previous timestamp of the timestamp and is a next timestamp of the second historical timestamp;
determining, for each eye, a first gaze direction of the eye at the first historical timestamp according to the first historical eye image of the eye, and determining a second gaze direction of the eye at the second historical timestamp according to the second historical eye image of the eye;
predicting a predicted gaze direction of the eye at the timestamp according to the first gaze direction and the second gaze direction;
calculating an included angle between the predicted gaze direction and the gaze direction of the eye at the timestamp; when the included angle is not greater than a third preset angle, retaining the eye image corresponding to the eye at the timestamp; when the included angle is greater than the third preset angle, deleting the eye image corresponding to the eye at the timestamp;
calculating a mean value of the gaze directions corresponding to the retained eye images according to the gaze directions corresponding to the retained eye images of each eye of the driver at each timestamp, to obtain a binocular gaze direction of the driver; and
determining the gaze region of the driver according to the binocular gaze direction, the head position information, the head rotation angle of the driver, and the position information of each region in the vehicle.

In combination with the first aspect, an embodiment of the present disclosure provides a sixth possible implementation of the first aspect, wherein the head rotation angle includes a head yaw angle in the horizontal direction and a head pitch angle in the vertical direction; and the determining whether the driving state of the driver is a distracted driving state according to the head rotation angle and the gaze region includes:
determining the driving state of the driver as the distracted driving state when any one or more of the following distracted conditions are continuously satisfied within a preset duration, wherein the distracted conditions include: the head yaw angle is greater than a first preset angle, the head pitch angle is greater than a second preset angle, and the gaze region is a region other than a front windshield region in the vehicle.

In a second aspect, an embodiment of the present disclosure further provides a driving state detection apparatus, including:
a first acquisition module, configured to acquire in real time a to-be-detected image containing a head of the driver during the driving of the vehicle by the driver;
a first detection module, configured to detect the head image of the driver from the to-be-detected image, input the head image into a trained head pose estimation model, and output the head pose of the driver through the head pose estimation model, wherein the head pose includes a head rotation angle and head position information;
a second detection module, configured to detect the face region of the driver from the to-be-detected image when the to-be-detected image contains the face region of the driver;
a first determination module, configured to determine face feature point position information from the face region, and determine eye feature point position information from the face feature point position information;
a second determination module, configured to determine the number of occluded eye feature points according to the eye feature point position information; and determine an eye region from the face region according to the eye feature point position information, to determine an eye image according to the eye region;
a first judgment module, configured to determine whether the eye image is reliable for gaze direction estimation according to the number of the occluded eye feature points;
an input module, configured to input, when the eye image is reliable for gaze direction estimation, the eye image into a trained gaze direction estimation model, and determine the gaze direction of the driver through the gaze direction estimation model;
a third determination module, configured to determine the gaze region of the driver according to the gaze direction of the driver, the head position information, the head rotation angle, and position information of each region in the vehicle; and
a second judgment module, configured to determine whether the driving state of the driver is a distracted driving state according to the head rotation angle and the gaze region.

In combination with the second aspect, an embodiment of the present disclosure provides a first possible implementation of the second aspect, wherein the apparatus further includes:
a third judgment module, configured to determine, when the to-be-detected image does not contain the face region of the driver, whether the driving state of the driver is a distracted driving state according to the head rotation angle of the driver.

In combination with the second aspect, an embodiment of the present disclosure provides a second possible implementation of the second aspect, wherein the occluded eye feature point is an occluded eye feature point of a single eye; and the first judgment module, when configured to determine whether the eye image is reliable for gaze direction estimation according to the number of the occluded eye feature points, is specifically configured to:
calculate, for each eye, a first ratio between the number of the occluded eye feature points corresponding to the eye and a preset total number of single-eye feature points;
represent, in response to the first ratio being greater than a first preset threshold, that the eye image corresponding to the eye is unreliable for gaze direction estimation;
input, in response to the first ratio being not greater than the first preset threshold, the eye image corresponding to the eye into a trained glasses-wearing discrimination model to determine whether the eye wears glasses through the glasses-wearing discrimination model;
represent, in response to the eye not wearing glasses, that the eye image corresponding to the eye is reliable for gaze direction estimation;
determine, in response to the eye wearing glasses, a type of the glasses;
represent, in response to the type of the glasses being light-shielding glasses, that the eye image corresponding to the eye is unreliable for gaze direction estimation;
determine, in response to the type of the glasses being transparent glasses, whether a light spot on the lens corresponding to the eye in the glasses satisfies a condition for affecting gaze direction estimation; and
represent, in response to the condition that the light spot on the lens corresponding to the eye in the glasses satisfies the condition for affecting gaze direction estimation, that the eye image corresponding to the eye is unreliable for gaze direction estimation; and representing, in response to the condition that the light spot on the lens corresponding to the eye in the glasses does not satisfy the condition for affecting gaze direction estimation, that the eye image corresponding to the eye is reliable for gaze direction estimation.

In combination with the second possible implementation of the second aspect, an embodiment of the present disclosure provides a third possible implementation of the second aspect, wherein the first judgment module, when configured to determine the type of the glasses if the eye wears glasses, is specifically configured to:
determine an intra-eyelid region and an extra-eyelid region from the eye image of the eye;
calculate a pixel grayscale mean value of the intra-eyelid region according to grayscale values of pixels in the intra-eyelid region; and calculate a pixel grayscale mean value of the extra-eyelid region according to grayscale values of pixels in the extra-eyelid region;
calculate a second ratio between the pixel grayscale mean value of the intra-eyelid region and the pixel grayscale mean value of the extra-eyelid region; and
determine, in response to the second ratio being greater than a second preset threshold, the type of the glasses as light-shielding glasses; and determine the type of the glasses as transparent glasses in response to the second ratio being not greater than the second preset threshold.

In combination with the second possible implementation of the second aspect, an embodiment of the present disclosure provides a fourth possible implementation of the second aspect, wherein the first judgment module, when configured to determine, when the type of the glasses is transparent glasses, whether a light spot on the lens corresponding to the eye in the glasses satisfies a condition for affecting gaze direction estimation, is specifically configured to:
calculate, when the type of the glasses is transparent glasses, a third ratio between the number of pixels having grayscale values greater than a third preset threshold and a total number of pixels in the eye image according to grayscale values of pixels in the eye image of the eye;
represent, if the third ratio is greater than a fourth preset threshold, that the light spot on the lens corresponding to the eye in the glasses satisfies the condition for affecting gaze direction estimation; and
represent, if the third ratio is not greater than the fourth preset threshold, that the light spot on the lens corresponding to the eye in the glasses does not satisfy the condition for affecting gaze direction estimation.

In combination with the second possible implementation of the second aspect, an embodiment of the present disclosure provides a fifth possible implementation of the second aspect, wherein the gaze direction is the gaze direction of a single eye; and the third determination module, when configured to determine the gaze region of the driver according to the gaze direction of the driver, the head position information, the head rotation angle, and position information of each region in the vehicle, is specifically configured to:
acquire, for each timestamp between the current timestamp and a target historical timestamp, a first historical eye image at a first historical timestamp and a second historical eye image at a second historical timestamp for each eye of the driver, wherein the first historical timestamp is a previous timestamp of the timestamp and is a next timestamp of the second historical timestamp;
determine, for each eye, a first gaze direction of the eye at the first historical timestamp according to the first historical eye image of the eye, and determining a second gaze direction of the eye at the second historical timestamp according to the second historical eye image of the eye;
predict a predicted gaze direction of the eye at the timestamp according to the first gaze direction and the second gaze direction;
calculate an included angle between the predicted gaze direction and the gaze direction of the eye at the timestamp; when the included angle is not greater than a third preset angle, retain the eye image corresponding to the eye at the timestamp; when the included angle is greater than the third preset angle, delete the eye image corresponding to the eye at the timestamp;
calculate a mean value of the gaze directions corresponding to the retained eye images according to the gaze directions corresponding to the retained eye images of each eye of the driver at each timestamp, to obtain a binocular gaze direction of the driver; and
determine the gaze region of the driver according to the binocular gaze direction, the head position information, the head rotation angle of the driver, and the position information of each region in the vehicle.

In combination with the second aspect, an embodiment of the present disclosure provides a sixth possible implementation of the second aspect, wherein the head rotation angle includes a head yaw angle in the horizontal direction and a head pitch angle in the vertical direction; and the second judgment module, when configured to determine whether the driving state of the driver is a distracted driving state according to the head rotation angle and the gaze region, is specifically configured to:
determine the driving state of the driver as the distracted driving state when any one or more of the following distracted conditions are continuously satisfied within a preset duration, wherein the distracted conditions include: the head yaw angle being greater than a first preset angle, the head pitch angle being greater than a second preset angle, and the gaze region being a region other than a front windshield region in the vehicle.

In a third aspect, an embodiment of the present disclosure further provides an electronic device, a processor, a memory and a bus, wherein the memory stores machine-readable instructions executable by the processor; when the electronic device is in operation, the processor communicates with the memory via the bus; and the machine-readable instructions, when executed by the processor, cause the processor to perform the steps in any possible implementation of the first aspect.

In a fourth aspect, an embodiment of the present disclosure further provides a computer-readable storage medium storing a computer program that, when executed by a processor, causes the processor to perform the steps in any possible implementation of the first aspect.

Embodiments of the present disclosure provide a driving state detection method, apparatus, electronic device, and readable storage medium, wherein the head pose of the driver is determined by inputting the head image of the driver into a head pose estimation model, and then the driving state of the driver is determined to be a distracted driving state by using the head pose. In this manner, compared to approaches relying on face feature point information, the approach in the present disclosure can identify the head pose of the driver regardless of the face rotation angle or the face pitch angle, and can also perform distraction detection on the driver, which is beneficial for reducing safety risks during driving.

Simultaneously, when the to-be-detected image contains the face region of the driver, it is determined whether the eye image is reliable for gaze direction estimation. When it is reliable for gaze direction estimation, the gaze direction is determined using the eye image, and then the gaze region of the driver is determined according to the gaze direction. Then, by combining the gaze region and the head rotation angle in the head pose, it is determined whether the driving state of the driver is a distracted driving state. In this embodiment, whether the eye image is available is determined before using the eye image to determine the gaze direction, and the eye image is used to determine the gaze direction only when the eye image is available, which is beneficial for ensuring that the determined gaze direction is more accurate, thereby improving the accuracy of detecting the distracted state of the driver.

To make the above objectives, features, and advantages of the present disclosure more apparent and easier to understand, preferred embodiments are described in detail below with reference to the drawings.

### BRIEF DESCRIPTION OF DRAWINGS

To explain the technical solutions of the embodiments of the present disclosure more clearly, the drawings will be briefly introduced. It should be understood that the drawings only show some embodiments of the present disclosure, so they should not be regarded as limiting the scope. For a person of ordinary skill in the art, other related drawings can be obtained according to these drawings without inventive effort.
FIG. 1 shows a flowchart of a driving state detection method according to an embodiment of the present disclosure;
FIG. 2 shows a schematic diagram of eye feature point position information for an eye according to an embodiment of the present disclosure;
FIG. 3 shows a flowchart of another driving state detection method according to an embodiment of the present disclosure;
FIG. 4 shows a schematic structural diagram of a driving state detection apparatus according to an embodiment of the present disclosure; and
FIG. 5 shows a schematic structural diagram of an electronic device according to an embodiment of the present disclosure.

### DETAILED DESCRIPTION OF EMBODIMENTS

To make the objectives, technical solutions, and advantages of the embodiments of the present disclosure clearer, the technical solutions in the embodiments of the present disclosure will be described clearly and completely in conjunction with the accompanying drawings in the embodiments of the present disclosure. Apparently, the described embodiments are only some rather than all of the embodiments of the present disclosure. The components of the embodiments of the present disclosure generally described and illustrated in the drawings herein may be arranged and designed in various different configurations. Therefore, the following detailed description of the embodiments of the present disclosure provided in the accompanying drawings is not intended to limit the scope of the claimed disclosure, but merely represents selected embodiments thereof. Based on the embodiments of the present disclosure, all other embodiments obtained by those skilled in the art without creative effort shall fall within the scope of protection of the present disclosure.

Considering that in the prior art, when performing distraction detection on a driver, the method of using the solvePnP algorithm (an algorithm for estimating camera pose) to detect whether the driver is in a distracted state relies on the face feature point information of the driver. When the camera cannot capture the face image of the driver, the face feature point information of the driver cannot be identified, and thus distraction detection cannot be performed on the driver, which undoubtedly increases safety risks during driving. In the method of using the gaze direction of the driver to determine whether a distracted state occurs, if the driver wears sunglasses or the glasses surface reflects light, gaze direction recognition becomes unreliable, which easily leads to errors in gaze direction estimation, thereby affecting the accuracy of distraction detection. Based on this, embodiments of the present disclosure provide a driving state detection method, apparatus, electronic device, and readable storage medium, which are described below through embodiments.

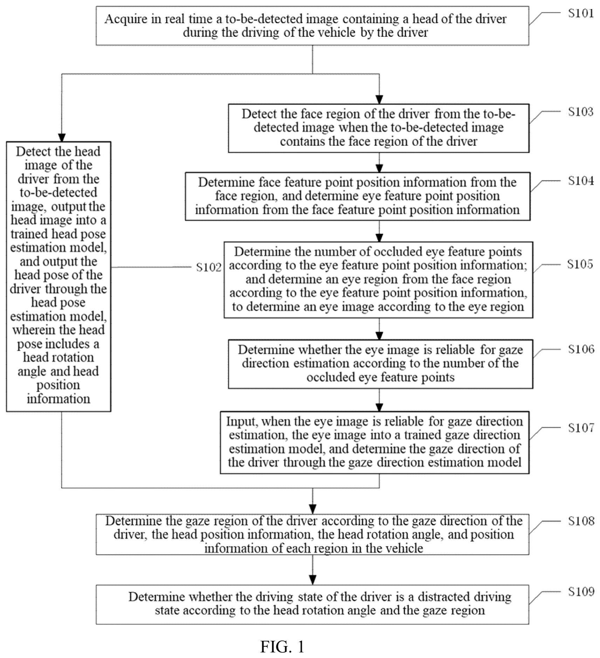

To facilitate understanding of this embodiment, a driving state detection method disclosed in an embodiment of the present disclosure is first described in detail. FIG. 1 shows a flowchart of a driving state detection method according to an embodiment of the present disclosure. As shown in FIG. 1, the method includes the following steps S101 to S109.

S101: acquiring in real time a to-be-detected image containing a head of the driver during the driving of the vehicle by the driver.

In this embodiment, vehicles driven by the driver include automobiles, new energy vehicles, etc. A camera is provided in the vehicle cabin, configured to capture in real time a video stream containing the head of the driver when the driver is driving the vehicle.

The video stream is obtained from the camera and decomposed into single-frame to-be-detected images that contain the head of the driver. Generally, the to-be-detected image at the current timestamp is the latest image decomposed from the video stream.

S102: detecting the head image of the driver from the to-be-detected image, inputting the head image into a trained head pose estimation model, and outputting the head pose of the driver through the head pose estimation model, wherein the head pose includes a head rotation angle and head position information.

In this embodiment, the to-be-detected image contains not only the head of the driver region but also background regions. To eliminate background interference, a head detection model is used to detect whether the to-be-detected image contains the head of the driver region. When the head of the driver region is contained, the head detection model outputs a head bounding box, and the head image of the driver is cropped from the to-be-detected image along the head bounding box.

The head image is input into a pre-trained head pose estimation model to estimate the head pose of the driver via the head pose estimation model. The head pose estimation model is trained using sample images containing the head of the driver.

The head pose includes a head rotation angle and head position information. The head rotation angle includes a head yaw angle in the horizontal direction and a head pitch angle in the vertical direction. The head rotation angle refers to the angle of turning the head left and right. Exemplarily, when the driver turns the head backward, the head rotation angle may be 180 degrees. The head pitch angle refers to the angle of pitching the head up and down, for example, when the driver looks upward or downward. The head position information is the head position coordinates in a 3D coordinate system constructed with the camera as the center.

S103: detecting the face region of the driver from the to-be-detected image when the to-be-detected image contains the face region of the driver.

In this embodiment, since the acquired to-be-detected image contains the head of the driver, the to-be-detected image may or may not contain the face region of the driver.

When the to-be-detected image contains the face region of the driver, steps S104 to S109 are continued.

Specifically, a face detection model is used to detect whether the to-be-detected image contains the face region of the driver. If the face region of the driver is contained, the face detection model outputs a face bounding box, and a region defined by the face bounding box is taken as the face region.

In one possible implementation, when the to-be-detected image does not contain the face region of the driver, it is determined whether the driving state of the driver is a distracted driving state according to the head rotation angle of the driver.

In this embodiment, when the to-be-detected image does not contain the face region of the driver, subsequent steps S104 to S109 are stopped, and the head rotation angle of the driver is directly used to determine whether the driving state of the driver is a distracted driving state.

When determining whether the driving state of the driver is a distracted driving state according to the head rotation angle of the driver, it can specifically be performed as follows: when the head yaw angle is greater than a first preset angle, or the head pitch angle is greater than a second preset angle, determining that the driving state of the driver is a distracted driving state; and when the head yaw angle is not greater than the first preset angle, and the head pitch angle is not greater than the second preset angle, determining that the driving state of the driver is a non-distracted driving state.

S104: determining face feature point position information from the face region, and determining eye feature point position information from the face feature point position information.

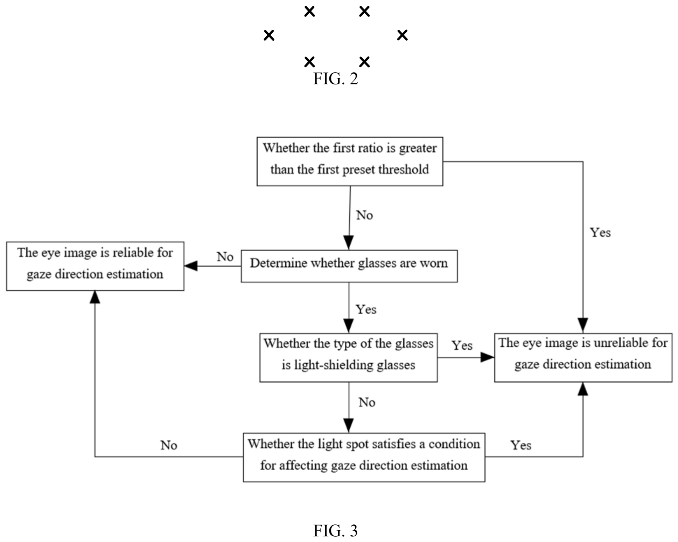

The face feature point position information includes: eye feature point position information, mouth feature point position information, nose feature point position information, eyebrow feature point position information, and face contour feature point position information. As shown in FIG. 2, the eye feature point position information can be eye contour feature point position information.

S105: determining the number of occluded eye feature points according to the eye feature point position information; and determining an eye region from the face region according to the eye feature point position information, to determine an eye image according to the eye region.

In this embodiment, the total number of eye feature points is fixed. The difference between the total number of eye feature points and the number of identifiable (i.e., non-occluded) eye feature points can be taken as the number of occluded eye feature points.

S106: determining whether the eye image is reliable for gaze direction estimation according to the number of the occluded eye feature points.

In one possible implementation, the eye image in step S105 is an eye image of a single eye, and the occluded eye feature point is also an occluded eye feature point of a single eye. When performing step S106, it can specifically be performed according to the following steps S1061 to S1068.

S1061: calculating, for each eye, a first ratio between the number of the occluded eye feature points corresponding to the eye and a preset total number of single-eye feature points.

In this embodiment, when the eye is unobstructed, the number of occluded eye feature points for a single eye should be 0, and the preset total number of single-eye feature points should be fixed. As shown in FIG. 2, the preset total number of single-eye feature points is 6.

In practice, due to reasons such as wearing glasses or head rotation, the number of identified eye feature points for a single eye can be less than the preset total number of single-eye feature points, meaning that there are occluded eye feature points at this time.

In this embodiment, by calculating the first ratio of the number of occluded eye feature points corresponding to each eye to the preset total number of single-eye feature points, and by the first ratio, it is determined whether the eye image corresponding to each eye is reliable for gaze direction estimation.

S1062: representing, in response to the first ratio being greater than a first preset threshold, that the eye image corresponding to the eye is unreliable for gaze direction estimation.

In this embodiment, taking one eye of the driver as an example, as shown in FIG. 3, when the first ratio of the eye is greater than the first preset threshold, it represents that a large portion of the eye is occluded, and thus the eye image corresponding to the eye is unreliable for gaze direction estimation at this time. Exemplarily, the first preset threshold is 1/2.

S1063: inputting, in response to the first ratio being not greater than the first preset threshold, the eye image corresponding to the eye into a trained glasses-wearing discrimination model to determine whether the eye wears glasses through the glasses-wearing discrimination model.

As shown in FIG. 3, when the first ratio of the eye is not greater than (i.e., less than or equal to) the first preset threshold, it represents that a small portion of the eye is occluded, and thus it is necessary to further determine whether each eye wears glasses.

S1064: representing, in response to the eye not wearing glasses, that the eye image corresponding to the eye is reliable for gaze direction estimation.

S1065: determining, in response to the eye wearing glasses, a type of the glasses.

In this embodiment, the types of the glasses include light-shielding glasses and transparent glasses, wherein the shading glasses include, for example, sunglasses, and the transparent glasses include, for example, myopia glasses, reading glasses, plain glasses, etc. Typically, the light transmittance of light-shielding glasses is less than that of transparent glasses.

In one possible implementation, when performing step S1065, it can specifically be performed according to the following steps: determining an intra-eyelid region and an extra-eyelid region from the eye image of the eye; calculating a pixel grayscale mean value of the intra-eyelid region according to grayscale values of pixels in the intra-eyelid region; and calculating a pixel grayscale mean value of the extra-eyelid region according to grayscale values of pixels in the extra-eyelid region; calculating a second ratio between the pixel grayscale mean value of the intra-eyelid region and the pixel grayscale mean value of the extra-eyelid region; and determining, in response to the second ratio being greater than a second preset threshold, the type of the glasses as light-shielding glasses; when the second ratio is not greater than the second preset threshold, determining the type of the glasses as transparent glasses.

In this embodiment, as shown in FIG. 2, the intra-eyelid region in the eye image refers to a region within an eye contour formed by eye feature points, and the extra-eyelid region refers to a remaining region of the eye image outside the intra-eyelid region.

S1066: representing, in response to the type of the glasses being light-shielding glasses, that the eye image corresponding to the eye is unreliable for gaze direction estimation.

S1067: determining, in response to the type of the glasses being transparent glasses, whether a light spot on the lens corresponding to the eye in the glasses satisfies a condition for affecting gaze direction estimation.

In one possible implementation, when performing step S1067, it can specifically be performed according to the following steps: calculating, when the type of the glasses is transparent glasses, a third ratio between the number of pixels having grayscale values greater than a third preset threshold and a total number of pixels in the eye image according to grayscale values of pixels in the eye image of the eye; if the third ratio of the eye is greater than a fourth preset threshold, it represents that the light spot on the lens corresponding to the eye in the glasses satisfies a condition for affecting gaze direction estimation; if the third ratio of the eye is not greater than the fourth preset threshold, it represents that the light spot on the lens corresponding to the eye in the glasses does not satisfies a condition for affecting gaze direction estimation.

S1068: representing, in response to the condition that the light spot on the lens corresponding to the eye in the glasses satisfies the condition for affecting gaze direction estimation, that the eye image corresponding to the eye is unreliable for gaze direction estimation; and representing, in response to the condition that the light spot on the lens corresponding to the eye in the glasses does not satisfy the condition for affecting gaze direction estimation, that the eye image corresponding to the eye is reliable for gaze direction estimation.

S107: inputting, when the eye image is reliable for gaze direction estimation, the eye image into a trained gaze direction estimation model, and determining the gaze direction of the driver through the gaze direction estimation model.

In this embodiment, when the eye image is unreliable for gaze direction estimation, subsequent steps S107 to S109 are stopped, and the determining whether the driving state of the driver is a distracted driving state according to the head rotation angle of the driver is directly executed.

As shown in FIG. 1, in this embodiment, the execution order of step S102 and steps S103 to S107 can be: executing step S102 first, then executing steps S103 to S107; or executing steps S103 to S107 first, then executing step S102; or executing step S102 and steps S103 to S107 simultaneously, which is not limited by the present disclosure.

S108: determining the gaze region of the driver according to the gaze direction of the driver, the head position information, the head rotation angle, and position information of each region in the vehicle.

In this embodiment, to improve the accuracy of determining the gaze region of the driver, the stability of the gaze direction of the driver needs to be judged. When there is a significant jump in the gaze direction of the driver, it represents that the gaze direction is unstable, and the accuracy of the gaze region determined using an unstable gaze direction will also be affected. Therefore, when determining the gaze region of the driver, the stability of the gaze direction may be judged first.

In one possible implementation, the gaze direction of the driver is the gaze direction of a single eye, and when performing step S108, it can specifically be performed according to the following steps:
S1081: acquiring, for each timestamp between the current timestamp and a target historical timestamp, a first historical eye image at a first historical timestamp and a second historical eye image at a second historical timestamp for each eye of the driver, wherein the first historical timestamp is a previous timestamp of the timestamp and is a next timestamp of the second historical timestamp;
S1082: determining, for each eye, a first gaze direction of the eye at the first historical timestamp according to the first historical eye image of the eye, and determining a second gaze direction of the eye at the second historical timestamp according to the second historical eye image of the eye;
S1083: predicting a predicted gaze direction of the eye at the timestamp according to the first gaze direction and the second gaze direction;
S1084: calculating an included angle between the predicted gaze direction and the gaze direction of the eye at the timestamp; when the included angle is not greater than a third preset angle, retaining the eye image corresponding to the eye at the timestamp; when the included angle is greater than the third preset angle, deleting the eye image corresponding to the eye at the timestamp;
S1085: calculating a mean value of the gaze directions corresponding to the retained eye images according to the gaze directions corresponding to the retained eye images of each eye of the driver at each timestamp, to obtain a binocular gaze direction of the driver; and
S1086: determining the gaze region of the driver according to the binocular gaze direction, the head position information, the head rotation angle of the driver, and the position information of each region in the vehicle.

In step S1081, the target historical timestamp refers to a historical timestamp before the current timestamp, and the duration of the duration from the current timestamp to the target historical timestamp is a specified duration. Exemplarily, the current timestamp is timestamp t0, the target historical timestamp is timestamp tn, when the specified duration is 6, n is 6, that is, the respective times included between the current timestamp t0 and the target historical timestamp t6 are t0, t1, t2, t3, t4, t5, t6, and the times in order from earliest to latest are t6, t5, t4, t3, t2, t1, t0.

Taking timestamp t4 as an example, the first historical eye image of each eye of the driver at the first historical timestamp t5 of timestamp t4 and the second historical eye image at the second historical timestamp t6 of timestamp t4 are acquired respectively.

In step S1082, taking one eye as an example, the first historical eye image of the eye is input into the gaze direction estimation model, and the first gaze direction of the eye at the first historical timestamp t5 is output via the gaze direction estimation model. The second historical eye image of the eye is input into the gaze direction estimation model, and the second gaze direction of the eye at the second historical timestamp t6 is output via the gaze direction estimation model.

In step S1083, according to the first gaze direction and the second gaze direction of the eye, the predicted gaze direction of the eye at timestamp t4 is predicted.

In step S1084, the included angle between the predicted gaze direction of the eye at timestamp t4 determined in step S1083 and the gaze direction of the eye at timestamp t4 determined in step S107 is calculated; when the included angle is not greater than a third preset angle, the eye image corresponding to the eye at timestamp t4 is retained; when the included angle is greater than the third preset angle, the eye image corresponding to the eye at timestamp t4 is deleted.

In step S1085, exemplarily, for the driver's left eye, among the respective times t6, t5, t4, t3, t2, t1, t0, if the eye images corresponding to timestamp t3 and timestamp t2 are deleted, the eye images corresponding to timestamp t6, timestamp t5, timestamp t4, timestamp t1, timestamp t0 are retained; for the driver's right eye, among the respective times t6, t5, t4, t3, t2, t1, t0, if the eye images corresponding to timestamp t3 and timestamp t4 are deleted, the eye images corresponding to timestamp t6, timestamp t5, timestamp t2, timestamp t1, timestamp t0 are retained; then the average value of the gaze directions of the left eye at timestamp t6, timestamp t5, timestamp t4, timestamp t1, timestamp t0 determined in step S105 and the gaze directions of the right eye at timestamp t6, timestamp t5, timestamp t2, timestamp t1, timestamp t0 determined in step S105 are calculated, to obtain the binocular gaze direction of the driver.

In step S1086, the head position information and the position information of each region in the vehicle are position coordinates in a 3D rectangular coordinate system constructed with the camera as the center. Therefore, the gaze region of the driver can be determined according to the binocular gaze direction, the head position information, the head rotation angle, and the position information of each region in the vehicle.

S109: determining whether the driving state of the driver is a distracted driving state according to the head rotation angle and the gaze region.

In one possible implementation, the head rotation angle includes a head rotation angle in the horizontal direction and a head pitch angle in the vertical direction. When any one or more of the following distracted conditions are continuously satisfied within a preset duration, the driving state of the driver is determined as the distracted driving state, wherein the distracted conditions include: the head yaw angle being greater than a first preset angle, the head pitch angle being greater than a second preset angle, and the gaze region being a region other than a front windshield region in the vehicle.

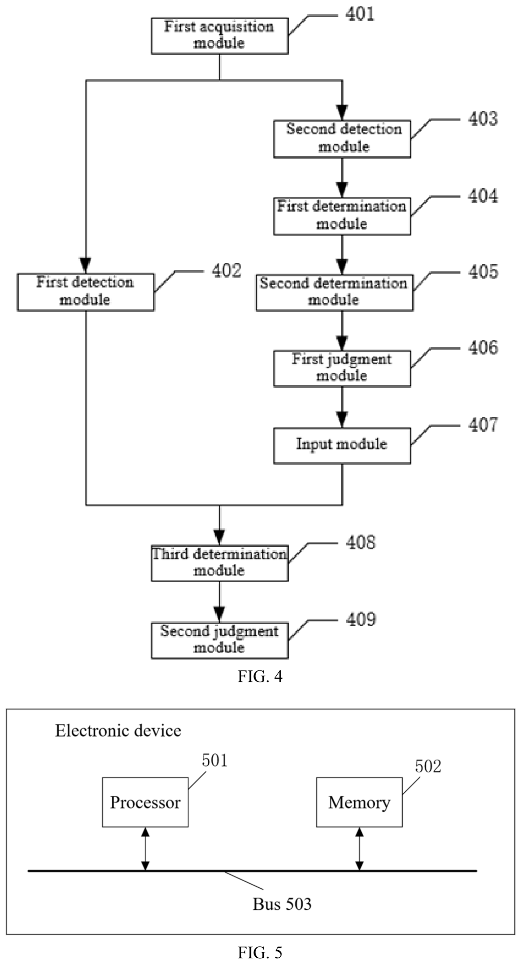

Based on the same technical concept, the present disclosure further provides a driving state detection apparatus. FIG. 4 shows a schematic structural diagram of a driving state detection apparatus according to an embodiment of the present disclosure. As shown in FIG. 4, the apparatus includes:
a first acquisition module 401, configured to acquire in real time a to-be-detected image containing a head of the driver during the driving of the vehicle by the driver;
a first detection module 402, configured to detect the head image of the driver from the to-be-detected image, input the head image into a trained head pose estimation model, and output the head pose of the driver through the head pose estimation model, wherein the head pose includes a head rotation angle and head position information;
a second detection module 403, configured to detect the face region of the driver from the to-be-detected image when the to-be-detected image contains the face region of the driver;
a first determination module 404, configured to determine face feature point position information from the face region, and determine eye feature point position information from the face feature point position information;
a second determination module 405, configured to determine the number of occluded eye feature points according to the eye feature point position information; and determine an eye region from the face region according to the eye feature point position information, to determine an eye image according to the eye region;
a first judgment module 406, configured to determine whether the eye image is reliable for gaze direction estimation according to the number of the occluded eye feature points;
an input module 407, configured to input, when the eye image is reliable for gaze direction estimation, the eye image into a trained gaze direction estimation model, and determine the gaze direction of the driver through the gaze direction estimation model;
a third determination module 408, configured to determine the gaze region of the driver according to the gaze direction of the driver, the head position information, the head rotation angle, and position information of each region in the vehicle; and
a second judgment module 409, configured to determine whether the driving state of the driver is a distracted driving state according to the head rotation angle and the gaze region.

Optionally, the apparatus further includes:
a third judgment module, configured to determine, when the to-be-detected image does not contain the face region of the driver, whether the driving state of the driver is a distracted driving state according to the head rotation angle of the driver.

Optionally, the occluded eye feature point is an occluded eye feature point of a single eye; and the first judgment module 406, when configured to determine whether the eye image is reliable for gaze direction estimation according to the number of the occluded eye feature points, is specifically configured to:
calculate, for each eye, a first ratio between the number of the occluded eye feature points corresponding to the eye and a preset total number of single-eye feature points;
representing, in response to the first ratio being greater than a first preset threshold, that the eye image corresponding to the eye is unreliable for gaze direction estimation;
input, in response to the first ratio being not greater than the first preset threshold, the eye image corresponding to the eye into a trained glasses-wearing discrimination model to determine whether the eye wears glasses through the glasses-wearing discrimination model;
represent, in response to the eye not wearing glasses, that the eye image corresponding to the eye is reliable for gaze direction estimation;
determine, in response to the eye wearing glasses, a type of the glasses;
represent, in response to the type of the glasses being light-shielding glasses, that the eye image corresponding to the eye is unreliable for gaze direction estimation;
determine, in response to the type of the glasses being transparent glasses, whether a light spot on the lens corresponding to the eye in the glasses satisfies a condition for affecting gaze direction estimation; and
represent, in response to the condition that the light spot on the lens corresponding to the eye in the glasses satisfies the condition for affecting gaze direction estimation, that the eye image corresponding to the eye is unreliable for gaze direction estimation; and represent, in response to the condition that the light spot on the lens corresponding to the eye in the glasses does not satisfy the condition for affecting gaze direction estimation, that the eye image corresponding to the eye is reliable for gaze direction estimation.

Optionally, the first judgment module 406, when configured to determine the type of the glasses if the eye wears glasses, is specifically configured to
determine an intra-eyelid region and an extra-eyelid region from the eye image of the eye;
calculate a pixel grayscale mean value of the intra-eyelid region according to grayscale values of pixels in the intra-eyelid region; and calculate a pixel grayscale mean value of the extra-eyelid region according to grayscale values of pixels in the extra-eyelid region;
calculate a second ratio between the pixel grayscale mean value of the intra-eyelid region and the pixel grayscale mean value of the extra-eyelid region; and
determine, in response to the second ratio being greater than a second preset threshold, the type of the glasses as light-shielding glasses; when the second ratio is not greater than the second preset threshold, determine the type of the glasses as transparent glasses.

Optionally, the first judgment module 406, when configured to determine, when the type of the glasses is transparent glasses, whether a light spot on the lens corresponding to the eye in the glasses satisfies a condition for affecting gaze direction estimation, is specifically configured to:
calculate, when the type of the glasses is transparent glasses, a third ratio between the number of pixels having grayscale values greater than a third preset threshold and a total number of pixels in the eye image according to grayscale values of pixels in the eye image of the eye;
represent, if the third ratio is greater than a fourth preset threshold, that the light spot on the lens corresponding to the eye in the glasses satisfies the condition for affecting gaze direction estimation; and
represent, if the third ratio is not greater than the fourth preset threshold, that the light spot on the lens corresponding to the eye in the glasses does not satisfy the condition for affecting gaze direction estimation.

Optionally, the gaze direction is the gaze direction of a single eye, and the third determination module 408, when configured to determine the gaze region of the driver according to the gaze direction of the driver, the head position information, the head rotation angle, and position information of each region in the vehicle, is specifically configured to:
acquire, for each timestamp between the current timestamp and a target historical timestamp, a first historical eye image at a first historical timestamp and a second historical eye image at a second historical timestamp for each eye of the driver, wherein the first historical timestamp is a previous timestamp of the timestamp and is a next timestamp of the second historical timestamp;
determine, for each eye, a first gaze direction of the eye at the first historical timestamp according to the first historical eye image of the eye, and determining a second gaze direction of the eye at the second historical timestamp according to the second historical eye image of the eye;
predict a predicted gaze direction of the eye at the timestamp according to the first gaze direction and the second gaze direction;
calculate an included angle between the predicted gaze direction and the gaze direction of the eye at the timestamp; when the included angle is not greater than a third preset angle, retain the eye image corresponding to the eye at the timestamp; when the included angle is greater than the third preset angle, delete the eye image corresponding to the eye at the timestamp;
calculate a mean value of the gaze directions corresponding to the retained eye images according to the gaze directions corresponding to the retained eye images of each eye of the driver at each timestamp, to obtain a binocular gaze direction of the driver; and
determine the gaze region of the driver according to the binocular gaze direction, the head position information, the head rotation angle of the driver, and the position information of each region in the vehicle.

Optionally, the head rotation angle includes a head yaw angle in the horizontal direction and a head pitch angle in the vertical direction; and the second judgment module 409, when configured to determine whether the driving state of the driver is a distracted driving state according to the head rotation angle and the gaze region, is specifically configured to:
determine the driving state of the driver as the distracted driving state when any one or more of the following distracted conditions are continuously satisfied within a preset duration, wherein the distracted conditions include: the head yaw angle is greater than a first preset angle, the head pitch angle is greater than a second preset angle, and the gaze region is a region other than a front windshield region in the vehicle.

FIG. 5 is a schematic structural diagram of an electronic device according to an embodiment of the present disclosure, including a processor 501, a memory 502, and a bus 503, wherein the memory 502 stores machine-readable instructions executable by the processor 501; when the electronic device executes the above information processing method, the processor 501 communicates with the memory 502 via the bus 503; and the machine-readable instructions, when executed by the processor 501, cause the processor to perform the steps of the method described in the first embodiment.

An embodiment of the present disclosure further provides a computer-readable storage medium storing a computer program that, when executed by a processor, causes the processor to perform the steps of the method described in the first embodiment.

Those skilled in the art can clearly understand that, for the convenience and brevity of description, the specific working processes of the above-described apparatus, electronic device, and computer-readable storage medium may refer to the corresponding processes in the aforementioned method embodiments, and are not repeated here.

In the several embodiments provided by the present disclosure, it should be understood that the disclosed apparatus and method may be implemented in other ways. The apparatus embodiments described above are merely illustrative. For example, the division of modules is only a logical function division, and there may be other division manners in actual implementation. For example, multiple modules or components may be combined or integrated into another system, or some features may be ignored or not executed. On the other hand, the mutual coupling or direct coupling or communication connection shown or discussed may be indirect coupling or communication connection through some communication interfaces, apparatuses, or units, and may be electrical, mechanical, or in other forms.

The units described as separate components may or may not be physically separated, and the components displayed as units may or may not be physical units, that is, they may be located in one place or distributed to multiple network units. Some or all of the units may be selected according to actual needs to achieve the objectives of the solutions of the embodiments.

In addition, the functional units in the various embodiments of the present disclosure may be integrated into one processing unit, or each unit may exist physically alone, or two or more units may be integrated into one unit.

If the functions are implemented in the form of software functional units and sold or used as independent products, they may be stored in a processor-executable non-volatile computer-readable storage medium. Based on such understanding, the essence of the technical solutions, or the part contributing to the prior art, or part of the technical solutions of the present disclosure, may be embodied in the form of a software product. The computer software product is stored in a storage medium and includes several instructions for enabling a computer device (which can be a personal computer, a server, a network device, etc.) to perform all or part of the steps of the methods described in the various embodiments of the present disclosure. The aforementioned storage media include: U disk, mobile hard disk, read-only memory (ROM), random access memory (RAM), magnetic disk, or optical disk, and other media that can store program codes.

Finally, it should be noted that the above embodiments are only specific implementations of the present disclosure, used to illustrate the technical solutions of the present disclosure, but not to limit them. The scope of protection of the present disclosure is not limited to this. Although the present disclosure has been described in detail with reference to the aforementioned embodiments, those of ordinary skill in the art should understand that any person skilled in the art may still modify or easily conceive variations to the technical solutions described in the aforementioned embodiments within the technical scope disclosed in the present disclosure, or perform equivalent substitutions of some of the technical features. However, these modifications, variations, or substitutions do not cause the essence of the corresponding technical solutions to deviate from the spirit and scope of the technical solutions of the embodiments of the present disclosure, and shall fall within the scope of protection of the present disclosure. Therefore, the protection scope of the present disclosure shall be determined by the protection scope of the appended claims.

### INDUSTRIAL PRACTICALITY

The present disclosure provides a driving state detection method, apparatus, electronic device and readable storage medium. By analyzing the head pose of the driver and gaze direction, whether the driving state is a distracted driving state can be determined, which can improve the accuracy of distracted state detection. When determining whether the driver is in a distracted state based on the head pose, the head image of the driver is input into a head pose estimation model to determine whether the driving state is a distracted driving state, so that the head pose of the driver can be identified for distraction detection regardless of the face rotation angle or face pitch angle of the driver. When determining whether the driver is in a distracted state based on the gaze direction, it is first determined whether the eye image is available; only when the eye image is available is the eye image used to determine the gaze direction; when the eye image is reliable for gaze direction estimation, the stability of the gaze direction of the driver needs to be determined, thereby improving the reliability when confirming the gaze region of the driver. The driving state detection method, apparatus, electronic device, and readable storage medium provided by the present disclosure improve the accuracy of distracted state detection, reduce traffic accidents caused by driver distraction, and significantly enhance vehicle driving safety.

## Claims

1. A driving state detection method, comprising:
acquiring in real time a to-be-detected image containing a head of a driver during a driving of the vehicle by the driver;
detecting a head image of the driver from the to-be-detected image, inputting the head image into a trained head pose estimation model, and outputting a head pose of the driver through the head pose estimation model, wherein the head pose comprises a head rotation angle and head position information;
detecting a face region of the driver from the to-be-detected image when the to-be-detected image contains the face region of the driver;
determining face feature point position information from the face region, and determining eye feature point position information from the face feature point position information;
determining a number of occluded eye feature points according to the eye feature point position information; and determining an eye region from the face region according to the eye feature point position information, to determine an eye image according to the eye region;
determining whether the eye image is reliable for gaze direction estimation according to the number of the occluded eye feature points;
inputting, in response to the eye image being reliable for gaze direction estimation, the eye image into a trained gaze direction estimation model, and determining a gaze direction of the driver through the gaze direction estimation model;
determining the gaze region of the driver according to the gaze direction of the driver, the head position information, the head rotation angle, and position information of each region in the vehicle; and
determining whether a driving state of the driver is a distracted driving state according to the head rotation angle and the gaze region.

2. The method according to claim 1, further comprising:
determining, when the to-be-detected image does not contain the face region of the driver, whether the driving state of the driver is a distracted driving state according to the head rotation angle of the driver.

3. The method according to claim 1, wherein the occluded eye feature points are occluded eye feature points of a single eye; and the step of determining whether the eye image is reliable for gaze direction estimation according to the number of the occluded eye feature points comprises:
calculating, for each eye, a first ratio between the number of the occluded eye feature points corresponding to the eye and a preset total number of single-eye feature points;
representing, in response to the first ratio being greater than a first preset threshold, that the eye image corresponding to the eye is unreliable for gaze direction estimation;
inputting, in response to the first ratio being not greater than the first preset threshold, the eye image corresponding to the eye into a trained glasses-wearing discrimination model to determine whether the eye wears glasses through the glasses-wearing discrimination model;
representing, in response to the eye not wearing glasses, that the eye image corresponding to the eye is reliable for gaze direction estimation;
determining, in response to the eye wearing glasses, a type of the glasses;
representing, in response to the type of the glasses being light-shielding glasses, that the eye image corresponding to the eye is unreliable for gaze direction estimation;
determining, in response to the type of the glasses being transparent glasses, whether a light spot on a lens corresponding to the eye in the glasses satisfies a condition for affecting gaze direction estimation; and
representing, in response to a condition that the light spot on the lens corresponding to the eye in the glasses satisfies the condition for affecting gaze direction estimation, that the eye image corresponding to the eye is unreliable for gaze direction estimation; and representing, in response to a condition that the light spot on the lens corresponding to the eye in the glasses does not satisfy the condition for affecting gaze direction estimation, that the eye image corresponding to the eye is reliable for gaze direction estimation.

4. The method according to claim 3, wherein the step of determining, in response to the eye wearing glasses, a type of the glasses comprises:
determining an intra-eyelid region and an extra-eyelid region from the eye image of the eye;
calculating a pixel grayscale mean value of the intra-eyelid region according to grayscale values of pixels in the intra-eyelid region; and calculating a pixel grayscale mean value of the extra-eyelid region according to grayscale values of pixels in the extra-eyelid region;
calculating a second ratio between the pixel grayscale mean value of the intra-eyelid region and the pixel grayscale mean value of the extra-eyelid region; and
determining, in response to the second ratio being greater than a second preset threshold, the type of the glasses as light-shielding glasses; and determining, in response to the second ratio being not greater than the second preset threshold, the type of the glasses as transparent glasses.

5. The method according to claim 3, wherein the step of determining, in response to the type of the glasses being transparent glasses, whether a light spot on a lens corresponding to the eye in the glasses satisfies a condition for affecting gaze direction estimation comprises:
calculating, in response to the type of the glasses being transparent glasses, a third ratio between the number of pixels having grayscale values greater than a third preset threshold and a total number of pixels in the eye image according to grayscale values of pixels in the eye image of the eye;
representing, in response to the third ratio being greater than a fourth preset threshold, that the light spot on the lens corresponding to the eye in the glasses satisfies the condition for affecting gaze direction estimation; and
representing, in response to the third ratio is not greater than the fourth preset threshold, that the light spot on the lens corresponding to the eye in the glasses does not satisfy the condition for affecting gaze direction estimation.

6. The method according to claim 3, wherein the gaze direction is a gaze direction of a single eye; and the step of determining the gaze region of the driver according to the gaze direction of the driver, the head position information, the head rotation angle, and position information of each region in the vehicle comprises:
acquiring, for each timestamp between a current timestamp and a target historical timestamp, a first historical eye image at a first historical timestamp and a second historical eye image at a second historical timestamp for each eye of the driver, wherein the first historical timestamp is a previous timestamp of the timestamp and is a next timestamp of the second historical timestamp;
determining, for each eye, a first gaze direction of the eye at the first historical timestamp according to the first historical eye image of the eye, and determining a second gaze direction of the eye at the second historical timestamp according to the second historical eye image of the eye;
predicting a predicted gaze direction of the eye at the timestamp according to the first gaze direction and the second gaze direction;
calculating an included angle between the predicted gaze direction and the gaze direction of the eye at the timestamp; in response to the included angle being not greater than a third preset angle, retaining the eye image corresponding to the eye at the timestamp; and in response to the included angle being greater than the third preset angle, deleting the eye image corresponding to the eye at the timestamp;
calculating a mean value of the gaze directions corresponding to the retained eye images according to the gaze directions corresponding to the retained eye images of each eye of the driver at each timestamp, to obtain a binocular gaze direction of the driver; and
determining the gaze region of the driver according to the binocular gaze direction, the head position information, the head rotation angle of the driver, and the position information of each region in the vehicle.

7. The method according to claim 1, wherein the head rotation angle comprises a horizontal head yaw angle and a vertical head pitch angle; the step of determining whether the driving state of the driver is a distracted driving state according to the head rotation angle and the gaze region comprises:
determining the driving state of the driver as the distracted driving state in response to any one or more of the following distracted conditions being continuously satisfied within a preset duration, wherein the distracted conditions comprise: the horizontal head yaw angle being greater than a first preset angle, the vertical head pitch angle being greater than a second preset angle, and the gaze region being a region other than a front windshield region in the vehicle.

8. A driving state detection apparatus, comprising:
a first acquisition module, configured to acquire in real time a to-be-detected image containing a head of the driver during the driving of the vehicle by the driver;
a first detection module, configured to detect the head image of the driver from the to-be-detected image, input the head image into a trained head pose estimation model, and output the head pose of the driver through the head pose estimation model, wherein the head pose comprises a head rotation angle and head position information;
a second detection module, configured to detect the face region of the driver from the to-be-detected image when the to-be-detected image contains the face region of the driver;
a first determination module, configured to determine face feature point position information from the face region, and determine eye feature point position information from the face feature point position information;
a second determination module, configured to determine the number of occluded eye feature points according to the eye feature point position information; and determine an eye region from the face region according to the eye feature point position information, to determine an eye image according to the eye region;
a first judgment module, configured to determine whether the eye image is reliable for gaze direction estimation according to the number of the occluded eye feature points;
an input module, configured to input, when the eye image is reliable for gaze direction estimation, the eye image into a trained gaze direction estimation model, and determine the gaze direction of the driver through the gaze direction estimation model;
a third determination module, configured to determine the gaze region of the driver according to the gaze direction of the driver, the head position information, the head rotation angle, and position information of each region in the vehicle; and
a second judgment module, configured to determine whether the driving state of the driver is a distracted driving state according to the head rotation angle and the gaze region.

9. An electronic device, comprising a processor, a memory and a bus, wherein the memory stores machine-readable instructions executable by the processor; when the electronic device is in operation, the processor communicates with the memory via the bus; and the machine-readable instructions, when executed by the processor, cause the processor to perform the steps of the method according to any one of claims 1 to 7.

10. A computer-readable storage medium storing a computer program that, when executed by a processor, causes the processor to perform the steps of the method according to any one of claims 1 to 7.
